(19) Europäisches Patentamt
European Patent Office
Office européen des brevets

(11) **EP 3 860 221 B1**

(12) **EUROPÄISCHE PATENTSCHRIFT**

(45) Veröffentlichungstag und Bekanntmachung des Hinweises auf die Patenterteilung:
**13.09.2023  Patentblatt 2023/37**

(21) Anmeldenummer: **20214043.0**

(22) Anmeldetag: **15.12.2020**

(51) Internationale Patentklassifikation (IPC):
**H04W 36/22** *(2009.01)*      **H04W 36/32** *(2009.01)*
**H04W 28/08** *(2023.01)*

(52) Gemeinsame Patentklassifikation (CPC):
**H04W 36/22;** H04W 28/08; H04W 36/32

(54) **VERFAHREN ZUR STEUERUNG DER LASTVERTEILUNG IN DRAHTLOSEN NETZEN MIT MEHREREN ZUGANGSPUNKTEN**

METHOD FOR CONTROLLING LOAD DISTRIBUTION IN WIRELESS NETWORKS WITH MULTIPLE ACCESS POINTS

PROCÉDÉ DE COMMANDE DE LA DISTRIBUTION DE CHARGE DANS DES RÉSEAUX SANS FIL À PLUSIEURS POINTS D'ACCÈS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.02.2020   DE 102020201262**

(43) Veröffentlichungstag der Anmeldung:
**04.08.2021   Patentblatt 2021/31**

(73) Patentinhaber: **Robert Bosch GmbH**
**70442 Stuttgart (DE)**

(72) Erfinder:
• **Schuengel, Maximilian**
  **89340 Leipheim (DE)**
• **Schoeffler, Michael**
  **75365 Calw-Altburg (DE)**
• **Ginthoer, David Osamu**
  **71229 Leonberg (DE)**

(56) Entgegenhaltungen:
DE-A1-102017 108 428     US-A1- 2016 242 088
US-A1- 2016 302 106     US-A1- 2017 208 502
US-A1- 2018 242 160

**Beschreibung**

Die vorliegende Erfindung betrifft ein Verfahren zum Lastausgleich in einem Kommunikationsnetz sowie eine Recheneinheit und ein Computerprogrammprodukt zur Durchführung des Verfahrens.

Stand der Technik

Drahtlose Netze umfassen üblicherweise mehrere Zugangspunkte über einen größeren Bereich hinweg, über die ein Endgerät Zugang in das Netz erhält. Dabei kann es sich beispielsweise um ein WLAN-Netz handeln oder auch um ein Mobilfunknetz, etwa auf Basis des LTE- oder 5G-Standards. Da jeder Zugangspunkt nur begrenzte Kapazitäten hat, beispielsweise in Bezug auf die zur Verfügung gestellte Bandbreite für die Verbindungen, können Situationen auftreten, in denen ein Zugangspunkt seine maximale Kapazität erreicht und keine weiteren Verbindungen oder Dienstanfragen mehr annehmen kann. Dies kann dazu führen, dass beispielsweise Geräte, die neu in den jeweiligen Bereich gelangen, keine Verbindung herstellen können oder Verbindungsabbrüche auftreten.

Jeder Zugangspunkt hat einen bestimmten Abdeckungsbereich oder Abdeckungsradius, innerhalb dessen ein Endgerät eine zuverlässige drahtlose Verbindung zur Bereitstellung von Diensten herstellen kann. Dieser Bereich wird auch als Funkzelle oder Zelle bezeichnet. Üblicherweise sind mehrere Zugangspunkte in einem Netzwerk so angeordnet, dass sich verschiedene Überlappungsbereiche ergeben, in denen ein Endgerät im Abdeckungsbereich von zwei oder mehr Zugangspunkten liegt. Damit kann eine ausreichende Abdeckung mit abbruchfreien Verbindungen für Endgeräte ermöglicht werden, die sich von einem dieser Bereiche in einen anderen bewegen. In verschiedenen Fällen wird dabei eine aktive Verbindung von einem Zugangspunkt an einen anderen übergeben, was mit dem Begriff Handover oder Handoff beschrieben wird. Dabei sind verschiedene Varianten möglich, beispielsweise bleibt bei einem Soft-Handover die Verbindung mit dem ersten Zugangspunkt bestehen, bis die Verbindung zum zweiten Zugangspunkt vollständig aufgebaut ist, was die Verbindungsqualität im Netz wesentlich verbessert. Ein Handover kann aber auch als Hard-Handover ohne parallele Verbindung zu zwei Zugangspunkten gestaltet werden. Ebenso kann auch ein Wechsel der Funkzelle (d.h. des zuständigen Zugangspunkts) für ein Endgerät eingeleitet werden, das an einer Zelle angemeldet ist, aber keine aktive Verbindung zu einem Zugangspunkt aufweist (Cell Reselection).

Die beschriebenen Wechsel zu einem anderen Zugangspunkt für eine aktive Verbindung oder ein inaktives Endgerät sind in den verschiedensten Funkstandards üblich, beispielsweise in den Mobilfunknetzen gemäß 3GPP-Standards wie GSM, UMTS, LTE, 5G, aber auch in WLAN-Netzen nach IEEE 802.11 (dort häufig als Roaming bezeichnet) und weiteren. Die genaue Ausgestaltung der Durchführung, der über einen Handover entscheidenden Netzelemente, der erforderlichen Schritte für die Verbindungsübergabe oder den Zellwechsel und andere Details sind jedoch vom einzelnen Standard abhängig und werden hier nicht näher ausgeführt. Darüber hinaus sind selbst Übergaben von Verbindungen zwischen Netzen unterschiedlicher Standards oder unterschiedlicher Funktechnologien, z.B. von 4G nach 5G, möglich. Die beschriebene Schwierigkeit überlasteter Zugangspunkte kann in beliebigen drahtlosen Netzen auftreten.

In der US 2018/0242160 A1 wird ein Verfahren zum Lastausgleich in einem Mobilfunksystem beschrieben, wobei die Last benachbarter Zugangspunkte berücksichtigt wird. Dabei kann die Abstrahlrichtung und damit der Abdeckungsbereich der Zugangspunkte jeweils so verändert werden, dass die erforderlichen Lastniveaus erfüllt werden können und eine Übergabe/Handover an geeignete Zugangspunkte vorgenommen werden kann.

Die DE 10 2017 108 428 A1 beschreibt ein Handover-Verfahren in einem drahtlosen Netz. Dabei werden bekannte Fahrtrouten (z.B. Daten aus einer Fahrzeugnavigation) genutzt, um für eine Mobilstation die beste folgende Zelle zu finden, wenn sich die Mobilstation durch die verschiedenen Zellen hindurchbewegt.

In US 2017/0208502 A1 ist ein Verfahren zum Lastausgleich beschrieben, bei dem die Kanalauslastung zwischen einem Endgerät und einem Zugangspunkt optimiert werden soll und bei Bedarf aufgrund verschiedener Parameter ein anderer Funkkanal gewählt wird.

Offenbarung der Erfindung

Erfindungsgemäß werden ein Verfahren zum Lastausgleich in einem Kommunikationsnetz sowie ein ausführendes Computerprogramm und eine Recheneinheit mit den Merkmalen der unabhängigen Patentansprüche vorgeschlagen. Vorteilhafte Ausgestaltungen sind Gegenstand der Unteransprüche sowie der nachfolgenden Beschreibung.

Insbesondere wird dabei ein Verfahren zum Lastausgleich in einem Kommunikationsnetz vorgeschlagen, bei dem zunächst ein Lastniveau eines ersten Zugangspunkts des Kommunikationsnetzes bestimmt wird. Dieses Lastniveau wird mindestens auf Grundlage von Parametern der Dienste bestimmt, die von dem Zugangspunkt an Endgeräte bereitgestellt werden. Als Dienst kann dabei beispielsweise jeder Telekommunikationsdienst wie im 3GPP-Standard verstanden werden. Falls das Lastniveau des ersten Zugangspunkts über einem vorgegebenen ersten Schwellwert liegt, wird die Übergabe mindestens eines Dienstes an einen geeigneten zweiten Zugangspunkt vorbereitet, wobei der zweite Zugangspunkt einer von einem oder mehreren benachbarten Zugangspunkten ist, deren Abdeckungsbereiche zumindest teilweise mit dem Abdeckungsbereich des ersten Zugangspunkts überlappen und damit einen Überlappungsbereich bilden. Damit kann die Last innerhalb von überlappenden Abdeckungsbereichen gleichmäßiger verteilt werden.

Bevorzugt kann das Lastniveau als normalisiertes Lastniveau, nämlich als Quotient aus einer absoluten Last des ersten Zugangspunkts und einer maximalen Last des ersten Zugangspunkts bestimmt werden. Eine normalisierte Lastmetrik auf Grundlage von dienstbasierten Informationen kann beispielsweise für zeitsensitive Kommunikation in einem Netz vorteilhaft sein.

Zur Durchführung einer Übergabe von Diensten umfasst das Verfahren weiter das Empfangen einer Nachricht, welche Informationen über das Lastniveau von einem oder mehreren benachbarten Zugangspunkten umfasst. Diese Nachricht kann beispielsweise von einer zentralen Einheit des Netzes gesendet werden, oder kann von jedem Zugangspunkt in regelmäßigen Abständen an seine benachbarten Zugangspunkte gesendet werden.

Weiter umfasst das Verfahren das Erfassen von Mobilitätsdaten mindestens eines Endgeräts, wobei die Mobilitätsdaten eine oder mehrere zukünftige Positionen des Endgeräts in einem oder mehreren vorbestimmten Zeitabschnitten angeben. Auf Grundlage der erfassten Mobilitätsdaten für das mindestens eine Endgerät sowie auf Grundlage von Parametern der Dienste, die von dem Zugangspunkt voraussichtlich für das mindestens eine Endgerät zu dem zukünftigen Zeitpunkt bereit gestellt werden sollen, wird dann der Teil der zukünftigen Last des Zugangspunkt zu einem zukünftigen Zeitpunkt bestimmt, und damit als Summe auch das gesamte Lastniveau des ersten Zugangspunkts zu einem zukünftigen Zeitpunkt. Durch Berücksichtigung von Mobilitätsdaten, die zu erwartende Positionen eines Endgeräts angeben, kann somit eine Vorhersage über die erforderlichen Ressourcen an einem Zugangspunkt getroffen werden und ein Lastausgleich rechtzeitig vorgenommen werden, so dass auch zukünftige Dienste für neu in einen Abdeckungsbereich eintretende Endgeräte zuverlässig zur Verfügung gestellt werden können.

Insbesondere können solche Mobilitätsdaten vorliegen, wenn es sich bei den Endgeräten beispielsweise um fahrerlose Fahrzeuge oder andere Endgeräte handelt, deren Position und Bewegungsroute aufgrund von Steuerdaten zumindest teilweise bekannt ist.

Zu diesem Zweck sollen die Mobilitätsdaten auch weiter mindestens einen Wahrscheinlichkeitswert umfassen, welcher angibt, mit welcher Wahrscheinlichkeit sich das Endgerät zu dem vorbestimmten Zeitpunkt an einer der ein oder mehreren Positionen befindet. Das Bestimmen eines zukünftigen Lastniveaus umfasst dann weiter das Gewichten einer zukünftigen Last, die durch das Endgerät verursacht wird, mit dem Wahrscheinlichkeitswert. Auf diese Weise kann zwischen Positionen, die das Endgerät sicher oder mit großer Wahrscheinlichkeit einnehmen wird, und möglichen weiteren Positionen unterschieden werden, z.B. in einer Routenplanung eines autonomen Fahrzeugs, bei dem die nächsten Fahrpositionen bereits festgelegt sind, und spätere Fahrtrouten mit geringerer Wahrscheinlichkeit vorgegeben sind.

Bei der Vorbereitung einer Dienstübergabe zum Lastausgleich kann dabei beispielsweise aus den benachbarten Zugangspunkten der Zugangspunkt mit dem geringsten derzeitigen Lastniveau als der zweite Zugangspunkt ausgewählt werden, und anschließend die eigentliche Übergabe mindestens eines Dienstes an den zweiten Zugangspunkt eingeleitet werden. Damit kann sichergestellt werden, dass nicht an einen ebenfalls bereits nahezu ausgelasteten Zugangspunkt übergeben wird und eine möglichst gleichmäßige Verteilung und zuverlässige Verbindung gesichert wird.

In einer weiteren Ausführungsform kann die Vorbereitung einer Übergabe von Diensten weiter das Bilden eines kombinierten Lastniveaus in dem Überlappungsbereich aus der Summe der Lastniveaus aller Zugangspunkte umfassen, deren Abdeckungsbereiche sich zumindest teilweise überlappen. Dann kann geprüft werden, ob das kombinierte Lastniveau in dem Überlappungsbereich einen vorgegebenen zweiten Schwellwert überschreitet, wobei keine Übergabe durchgeführt wird, wenn das kombinierte Lastniveau den zweiten Schwellwert überschreitet. Diese Prüfung kann beispielsweise auf einfache Weise verhindern, dass in einem Bereich, in dem bereits alle zuständigen Zugangspunkte nahe an ihrem maximalen Lastniveau sind, Dienste weiter übergeben werden. Da üblicherweise kein Zugangspunkt mehr als sein maximales Lastniveau bereitstellen kann, weist ein maximales kombiniertes Lastniveau darauf hin, dass alle einzelnen Lastniveaus ebenfalls nahezu ausgelastet sind.

Die vorstehend beschriebenen Verfahrensschritte können beispielsweise direkt von einem Zugangspunkt in einem Kommunikationsnetz bzw. von einer geeigneten Steuereinheit des Zugangspunkts durchgeführt werden. Parallel oder alternativ kann das Verfahren auch von einer zentralen Steuereinheit in dem Kommunikationsnetz durchgeführt werden, welche die Lastniveaus der einzelnen Zugangspunkte überwachen kann.

Wichtige Anwendungsbereiche für drahtlose Netze bzw. die Erfindung liegen nicht nur in der persönlichen Kommunikation, sondern insbesondere auch in industriellen Umgebungen, wo vernetzte Steuerung und Informationsverarbeitung zunehmend für alle Bereiche von Produktion bis Verwaltung genutzt wird. In diesen Fällen werden häufig auch lokale oder private Netze eingesetzt, für welche dieselben Schwierigkeiten in Bezug auf die maximale Kapazität der Zugangspunkte auftreten.

Ein Bereich, in dem drahtlose Netzwerke zunehmend genutzt werden, sind fahrerlose Transportfahrzeuge (FTF, auch Automated Guided Vehicle, AGV). Dabei kann es sich sowohl um automatisierte Fahrzeuge handeln, die aus der Ferne durch eine Steuerungseinheit mittels Anweisungen vollständig gesteuert werden, als auch autonome Fahrzeuge, die zumindest einen Teil der Steuerung und Routenplanung eigenständig übernehmen. Solche Fahrzeuge werden beispielsweise zum Materialtransport im industriellen Kontext eingesetzt, etwa zum Transport von Waren in einer Lagerhalle. Durch die Veränderung ihrer Position muss ein derartiges Fahrzeug zur Aufrechterhaltung einer kontinuierlichen Netzverbindung über verschiedene Zugangspunkte kommunizieren, wenn z.B. eine Bewegung von einem in einen anderen Abdeckungsbereich stattfindet, so dass auch hier Handover und Zellenwechsel entlang der Fahrtroute genutzt werden. Dabei werden gleichzeitig hohe Anforderungen in Bezug auf eine zuverlässige Verbindung sowie eine geringe Latenzzeit gestellt.

Eine erfindungsgemäße Recheneinheit, z.B. eine Steuereinheit eines Zugangspunkts, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn eine ausführende Steuereinheit noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Figurenbeschreibung

Figur 1 zeigt eine schematische Darstellung einer Situation in einem drahtlosen Netzwerk, in der Ausführungsformen der Erfindung zur Anwendung kommen können;

Figur 2 zeigt beispielhaft die Anwendung von Ausführungsformen in einer Situation gemäß Figur 1;

Figur 3 zeigt einen Verfahrensablauf einer beispielhaften Ausführungsform eines Lastausgleichs,

Figur 4a und b zeigen verschiedene Zeitpunkte einer Ausführungsform, bei der für einen Teil der Endgeräte Mobilitätsdaten vorliegen; und

Figur 5 zeigt einen Verfahrensablauf einer Ausführungsform, bei der für einen Teil der Endgeräte Mobilitätsdaten vorliegen.

Detaillierte Beschreibung

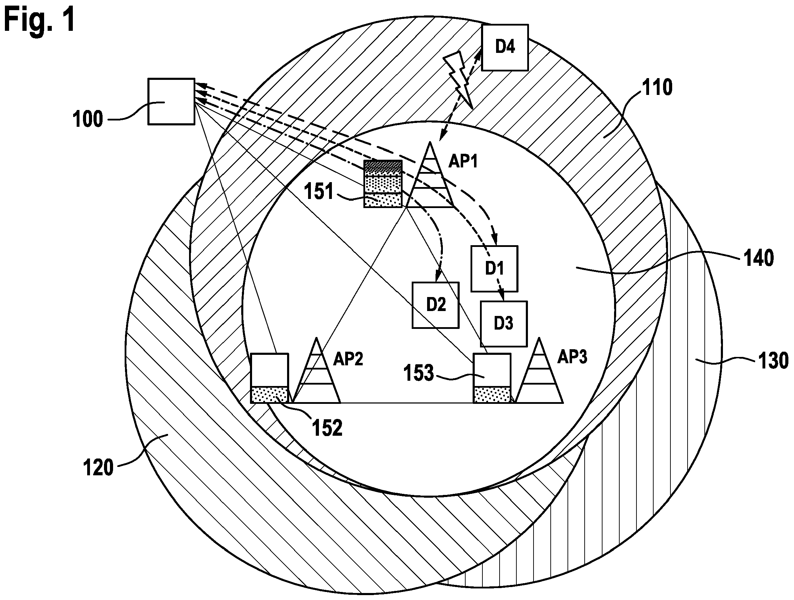

In Figur 1 ist schematisch eine Situation in einem drahtlosen Netzwerk dargestellt, in der verschiedene Ausführungsformen zur Anwendung kommen könnten.

Dabei sind drei Zugangspunkte AP1, AP2 und AP3 gezeigt, über die sich ein Endgerät drahtlos mit einem Netz 100 verbinden kann. Dabei kann es sich generell um beliebige Zugangspunkte handeln; insbesondere kann es sich bei den drahtlosen Zugangspunkten auch um Basisstationen eines Mobilfunknetzes handeln, also beispielsweise um einen Node B. Über die Zugangspunkte können geeignete Endgeräte mit dem eigentlichen Netz oder Kernnetz (core network) kommunizieren. Dabei wurden zwischenliegende Netzelemente zwischen den Zugangspunkten AP1, AP2, AP3 und dem Netz 100, die wieder netzabhängig unterschiedlich gestaltet sein können, hier zur Vereinfachung ausgelassen, wie etwa Vermittlungsstellen, Controller und weitere.

Jedem drahtlosen Zugangspunkt kann ein Abdeckungsbereich (Funkzelle) zugeordnet werden, der den lokalen Bereich beschreibt, in dem ein ausreichender Empfang zur zuverlässigen Verbindung mit einem Endgerät vorhanden ist. Damit ergibt sich für jeden der in Figur 1 gezeigten Zugangspunkte AP1, AP2, AP3 ein anderer Abdeckungsbereich 110, 120, 130 in einem Radius um den jeweiligen Zugangspunkt herum, die als Kreise in der Figur gezeigt sind. Soweit mehrere Zugangspunkte in ausreichender Nähe zueinander angeordnet sind, können sich diese Abdeckungsbereiche auch zumindest teilweise überlappen. Bei überlappenden Abdeckungsbereichen kann ein Endgerät, das sich im Überlappungsbereich 140 befindet, also mit jedem der zugehörigen Zugangspunkte theoretisch eine drahtlose Verbindung aufbauen. Damit kann sichergestellt werden, dass für ein Endgerät jederzeit eine Verbindung in das entsprechende Netzwerk möglich ist, auch bei einer Bewegung von einem Abdeckungsbereich in einen anderen, oder bei Ausfall eines Zugangspunkts.

Figur 1 zeigt nun eine Situation, in der drei Endgeräte D1, D2 und D3 sich in einem überlappenden Abdeckungsbereich 140 aller drei Zugangspunkte befinden und alle über denselben ersten Zugangspunkt AP1 mit dem Netz 100 verbunden sind. Die Verbindung bzw. Kommunikation mit dem Netz über einen Zugangspunkt wird durch den Verlauf der gestrichelten Pfeile in der Figur dargestellt. Diese einseitige Verteilung kann für eine hohe Belastung bis an die Lastgrenzen dieses Zugangspunkts AP1 sorgen, was durch die nebenstehende schematische Lastanzeige 151 in der Zeichnung dargestellt ist. Sobald nun ein weiteres Endgerät D4 in den Abdeckungsbereich 110 des bereits nahezu vollständig ausgelasteten Zugangspunkt AP1 gelangt und eine Verbindung herstellen möchte, kann der Zugangspunkt AP1 keine ausreichenden Ressourcen für Dienste mehr bereitstellen, so dass eine Verbindung bzw. Dienstanfrage abgewiesen wird. Dagegen sind die Zugangspunkte AP2 und AP3 zur gleichen Zeit nur relativ gering ausgelastet, wie durch die jeweiligen Lastanzeigen 152 und 153 angezeigt.

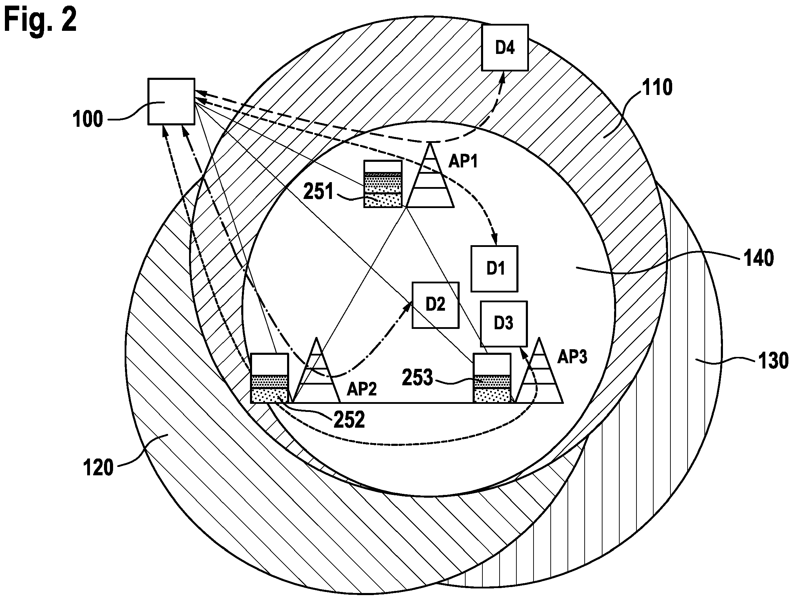

Figur 2 zeigt schematisch, wie eine Überlast-Situation wie in Figur 1 gemäß beispielhaften Ausführungsformen vermieden werden kann. Dabei sind erneut die drei Zugangspunkte AP1, AP2 und AP3 an räumlich unterschiedlichen Positionen und mit verschiedenen, aber teilweise überlappenden Abdeckungsbereichen 110, 120 und 130 gegeben. Da sich die drei Endgeräte D1, D2 und D3 wie im ersten Beispiel alle innerhalb des Überlappungsbereichs 140 befinden, können sie eine Verbindung zu jedem beliebigen der Zugangspunkte AP1, AP2 und AP3 herstellen. Um nun eine Überlastung eines einzelnen Zugangspunkts zu vermeiden, werden daher Kommunikationsflüsse aktiv einem der anderen Zugangspunkte im Überlappungsbereich zugewiesen, so dass die Last gleichmäßiger auf die Zugangspunkte verteilt wird und jederzeit sichergestellt ist, dass auch für weitere Endgeräte oder weitere Dienstanforderungen ausreichende Kapazitäten vorhanden sind. Dies kann als Lastausgleich (load balancing) bezeichnet werden. Dabei kann vor dem Lastausgleich die Situation aus Figur 1 vorliegen, in der alle drei Endgeräte mit dem Zugangspunkt AP1 verbunden sind.

Als Ergebnis kann dann im gezeigten Beispiel die Netzverbindung eines ersten Endgeräts D1 zum Kernnetz 100 beispielsweise über den ersten Zugangspunkt AP1 geleitet werden, die Netzverbindung des zweiten Endgeräts D2 über den zweiten Zugangspunkt AP2 und die Netzverbindung des dritten Endgeräts D3 über den dritten Zugangspunkt AP3. Erneut sind die Kommunikationsflüsse durch den Verlauf der gestrichelten Pfeile zwischen Kernnetz und Endgerät über die jeweiligen Zugangspunkte dargestellt. Wie über die schematischen Lastanzeigen 251, 252, 253 der Zugangspunkte dargestellt ist, ist die Last nun gleichmäßiger auf die Zugangspunkte verteilt und jeder Zugangspunkt besitzt noch freie Kapazitäten für weitere Verbindungen oder Dienstanfragen. Wenn also nun ein viertes Endgerät D4 in den Abdeckungsbereich 210 des ersten Zugangspunkts gelangt, kann eine Verbindung mit diesem Zugangspunkt zuverlässig hergestellt werden. Dabei kann bestimmt werden, welche Kommunikationsflüsse bevorzugt an andere Zugangspunkte abgegeben werden sollen, um sowohl eine gleichmäßige Lastverteilung als auch eine kontinuierliche Bereitstellung der angeforderten Dienste zu ermöglichen.

Beispielsweise können in einer Ausführungsform bevorzugt Dienste mit niedriger Priorität an einen anderen Zugangspunkt übergeben werden. Dabei kann optional auch in Kauf genommen werden, dass die Verbindungsqualität für diesen Dienst verschlechtert wird, solange die Mindestvoraussetzungen zur Bereitstellung des Dienstes erfüllt werden.

Es ist optional auch möglich, bei zu hoher Auslastung aller verfügbaren Zugangspunkte, so dass auch bei einem Lastausgleich nicht genügend Ressourcen zur Verfügung stehen, beispielsweise das vorübergehende Fallenlassen eines Dienstes bzw. Abbrechen einer Kommunikationsverbindung in Betracht zu ziehen. Auch diese Entscheidung kann beispielsweise auf Basis von Prioritätswerten getroffen werden.

Gemäß beispielhaften Ausführungsformen kann dieser Lastausgleich auf Grundlage einer relativen derzeitigen Last jedes Zugangspunkts stattfinden. Zu diesem Zweck kann eine Metrik für die Last definiert werden, die auf verschiedenen dienstbezogenen Informationen beruhen kann.

Zur Definition einer bevorzugt normalisierten Lastmetrik können verschiedene Parameter herangezogen werden. Insbesondere können dazu beispielsweise Dienstgüte-Parameter (Quality of Service, QoS-Parameter) oder Deskriptoren (z.B. TSN flow descriptor) verwendet werden, wie sie in verschiedenen Mobilfunkstandards und Kommunikationsstandards definiert sind. Ebenso können aber alle anderen geeigneten dienstbezogenen bzw. verbindungsrelevanten Parameter genutzt werden.

Beispielsweise kann die zeitliche Häufigkeit des jeweiligen lasterzeugenden Kommunikationsflusses bzw. Dienstes als Parameter genutzt werden, wobei beispielsweise zwischen isochronen, zyklischen und azyklischen Diensten unterschieden werden kann. Ein Prioritätsparameter kann angeben, mit welcher Priorität die Daten übertragen werden müssen. Beispielsweise können sicherheitsrelevante Daten an ein Fahrzeug mit hoher Priorität übertragen werden. Auch die zu übertragende Datenmenge kann in die normalisierte Last einfließen, beispielsweise in Form einer Anzahl von benötigten Frames oder einem anderen geeigneten Maß für die Datenmenge. Weiter können Grenzwerte für die erwartete Verzögerung bzw. Latenzzeit eines Datenpakets (delay budget, survival time) einbezogen sein. Weitere denkbare Parameter, die in eine Lastmetrik einfließen können, sind Schwankungen in der Laufzeit (Jitter), die Verfügbarkeit der Dienste oder Verlustraten für Datenpakete.

Aus diesen und anderen Parametern kann die normalisierte Last durch Anwendung von verschiedenen arithmetischen und/oder statistischen Operationen abgeleitet werden. Beispielsweise könnten zwei der oben genannten Parameter miteinander multipliziert werden.

Die tatsächliche Bestimmung der Last aus diesen Parametern und die Auswahl, welche Parameter in die Lastbestimmung einfließen sollen, wird von den jeweiligen Anwendungsfällen abhängig sein und ist daher hier nicht im Detail dargestellt. Die so bestimmte Last bildet schließlich die Grundlage für ein Lastausgleichsverfahren. Soweit im Folgenden eine Last angeführt ist, kann diese bevorzugt auch eine normalisierte Last sein.

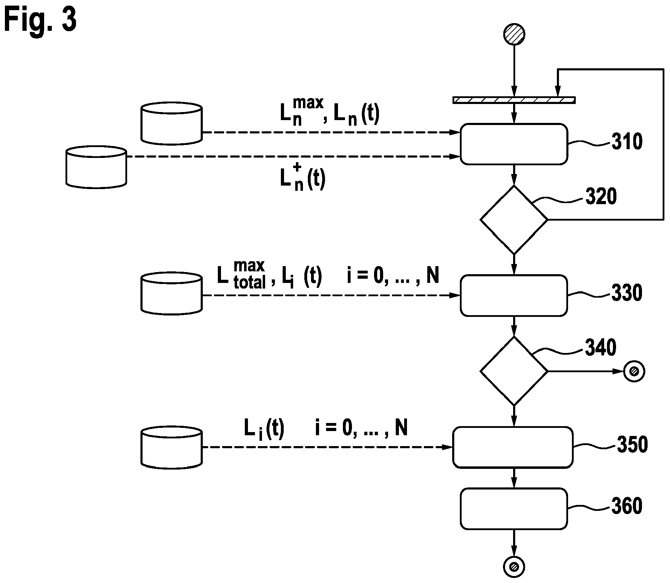

In Figur 3 ist ein Ablaufdiagramm eines beispielhaften Verfahrensablaufs zum Lastausgleich in einer Situation wie in Figur 2 gezeigt. Dabei bilden wieder die Abdeckungsbereiche dreier drahtloser Zugangspunkte einen gemeinsamen Überlappungsbereich, in dem sich drei mobile Endgeräte befinden. Zu Beginn des Verfahrens verwaltet der Zugangspunkt AP1 drei Dienste für die drei Endgeräte.

Jeder Zugangspunkt bestimmt dazu in Schritt 310 kontinuierlich bzw. in vorgegebenen Abständen sein derzeitiges normalisiertes Lastniveau gemäß der folgenden Gleichung:

$$l_n(t) = \frac{L_n(t)}{L_n^{\max}} \ , \ 0 \leq l_n(t) \leq 1 \qquad\qquad (1)$$

wobei $l_n(t)$ das derzeitige Lastniveau am n-ten Zugangspunkt $AP_n$ ist, $L_n(t)$ die derzeitige absolute Last an diesem Zugangspunkt $AP_n$, und $L_n^{\max}$ die maximale absolute Last am Zugangspunkt $AP_n$.

In Schritt 320 wird geprüft, ob das so bestimmte Lastniveau des Zugangspunkts unter einem vorgegebenen Wert liegt. Falls festgestellt wird, dass das Lastniveau unterhalb vorgegebener Schwellwerte liegt, kann das Verfahren für diesen Zeitschritt beendet werden und im nächsten Zeitschritt erneut das Lastniveau nach Gleichung (1) berechnet werden. Eine hohe Auslastung des jeweiligen Zugangspunkts, also ein Fall, in dem die derzeitige absolute Last sich der maximalen Last annähert oder das normalisierte Lastniveau gegen 1 geht,

$$L_n(t) \rightarrow L_n^{\max}, \quad l_n(t) \rightarrow 1 \qquad\qquad (2),$$

soll dagegen bevorzugt eine Umverteilung von zumindest einem Teil der Dienste dieses Zugangspunkts an einen anderen Zugangspunkt auslösen. Optional kann dabei auch ein Schwellwert festgelegt werden, der unterhalb des maximalen Lastniveaus des Zugangspunkts liegt.

Zu diesem Zweck kann ein Zugangspunkt weiter zunächst prüfen, ob innerhalb des Überlappungsbereichs, d.h. innerhalb des Bereichs, in dem sich mehrere Abdeckungsbereiche mehrerer Zugangspunkte überlappen, ausreichende Ressourcen vorhanden sind, indem in Schritt 330 die derzeitige Last der N Zugangspunkte summiert werden und daraus ein kombiniertes normalisiertes Lastniveau $l_{total}(t)$ innerhalb des Überlappungsbereichs gebildet wird,

$$l_{total}(t) = \frac{\sum_{n=1}^{N} L_n(t)}{L_{total}^{\max}}, \quad 0 \leq l_{total}(t) \leq 1 \qquad\qquad (3),$$

wobei $L_{total}^{\max}$ eine maximale kombinierte absolute Last in dem Überlappungsbereich ist, die aus den Summen der einzelnen Maximallasten gebildet werden kann.

Es versteht sich, dass zur Bestimmung des kombinierten Lastniveaus jedem Zugangspunkt Informationen über die Abdeckungsbereiche der Zugangspunkte in der Umgebung sowie über deren aktuelle Lastniveaus vorliegen sollen. Zu diesem Zweck können beispielsweise benachbarte Zugangspunkte regelmäßig ihr derzeitiges Lastniveau direkt an andere Zugangspunkte übermitteln oder an ein Element des Netzwerks, welches die aktuellen Lastniveaus der relevanten Zugangspunkte dann jedem einzelnen Zugangspunkt übermittelt oder weiterleitet. Dabei muss der Abdeckungsbereich eines Zugangspunkts nicht direkt als Parameter weitergegeben werden, solange für jeden Zugangspunkt deutlich ist, welche umgebenden Zugangspunkte einen überlappenden Bereich bilden, und an welche Zugangspunkte damit Dienste übergeben werden können. Alternativ oder zusätzlich zu einem derzeitigen normalisierten Lastniveau kann ein Zugangspunkt auch seine absoluten Lastwerte sowie seine Grenzwerte für maximale Auslastung angeben, so dass dann der auswertende Zugangspunkt bzw. eine andere Steuereinheit aus diesen Daten das normalisierte Lastniveau des anderen Zugangspunkts bestimmt. Die Informationen über die Auslastung können in eigenen Protokollnachrichten oder zusammen mit anderen Daten in geeigneten Formaten übermittelt werden.

Falls dann in Schritt 340 festgestellt wurde, dass innerhalb des Überlappungsbereich in Summe ausreichende Ressourcen vorliegen, also ein vorgegebener Grenzwert für das kombinierte Lastniveau $l_{total}(t)$ im Überlappungsbereich nicht überschritten wird, kann der überlastete Zugangspunkt eine Übergabe von einem oder mehreren Diensten an einen anderen Zugangspunkt im Überlappungsbereich vorbereiten. Der Grenzwert kann wie bereits beschrieben bei einer maximalen Auslastung der Zugangspunkte oder bei einem geringeren Schwellwert liegen.

Dazu kann zunächst in Schritt 350 ein geeigneter Zugangspunkt aus den benachbarten Zugangspunkten gewählt werden. Die Auswahl kann beispielsweise darauf beruhen, dass jeweils der Zugangspunkt im Überlappungsbereich gewählt wird, welcher das geringste derzeitige Lastniveau aufweist. Bevorzugt liegen dem abgebenden Zugangspunkt nicht nur Informationen über das normalisierte Lastniveau der umgebenden Zugangspunkte vor, sondern auch über die absoluten Lastwerte, so dass auch geprüft werden kann, ob die Lastparameter des abzugebenden Dienstes durch den aufnehmenden Zugangspunkt ausreichend erfüllt werden können. Anschließend wird die Übergabe des Dienstes in Schritt 360 eingeleitet, beispielsweise durch entsprechende Protokollnachrichten an das betreffende Endgerät und/oder an andere Zugangspunkte (z.B. den aufnehmenden Zugangspunkt) oder Steuereinheiten im Netz.

Wenn dagegen in Schritt 340 anhand der Prüfung des kombinierten Lastniveaus festgestellt wird, dass die kombinierte Last aller Zugangspunkte im Überlappungsbereich in Richtung der definierten Lastgrenzen geht oder diese bereits (aktuell oder voraussichtlich) überschreitet, also für den Fall

$$\sum\nolimits_{n=1}^{N} L_n(t) \rightarrow L_{total}^{max}, \quad l_{total} \rightarrow 1 \tag{4},$$

ist eine Übergabe von Diensten üblicherweise zunächst nicht sinnvoll oder möglich. Damit endet die Auswertung des aktuellen Lastniveaus zunächst und wird für den nächsten Zeitschritt erneut von vorne durchgeführt.

Optional kann in diesem Fall dennoch eine Übergabe von Diensten zwischen zwei oder mehreren Zugangspunkten stattfinden, um die Last innerhalb des Überlappungsbereichs gleichmäßiger zu verteilen und so zuverlässige Kommunikation sicherzustellen, auch wenn dadurch keine zusätzlichen Ressourcen für weitere Endgeräte frei werden. Auch hier kann wie zuvor dargestellt das jeweilige Lastniveau einzelner abgebender und aufnehmender Zugangspunkte als Grundlage für die Wahl des Zugangspunkts, an den ein Dienst übergeben werden soll, dienen.

Alternativ oder zusätzlich zu der Übergabe von Diensten kann auch festgelegt sein, dass bei einer zu hohen kombinierten Last im Überlappungsbereich, die eine Übergabe von Diensten an einen anderen Zugangspunkt nicht möglich oder sinnvoll macht, weiter geprüft wird, ob einer der vorhandenen Dienste eines Zugangspunkts fallen gelassen werden kann. Dies kann insbesondere sinnvoll sein, wenn Dienste mit hoher Priorität angefordert werden oder voraussichtlich angefordert werden, so dass ein Dienst mit sehr niedriger Priorität vorübergehend fallen gelassen wird, um an einem Zugangspunkt ausreichende Ressourcen zu schaffen.

Für die Übergabe von Diensten an andere Zugangspunkte können weitere Bedingungen und Prüfungen festgelegt werden, um beispielsweise häufige Wechsel von Zugangspunkten zu verhindern. Alternativ können solche Bedingungen durch geeignete Wahl der Parameter, die in die Bestimmung der Last einfließen, berücksichtigt werden.

Neben den bereits genannten Parametern können in weiteren Ausführungsformen auch Positionsinformationen in einem Lastausgleichsverfahren berücksichtigt werden. Eine Position eines Endgeräts kann beispielsweise entweder durch geeignete Positionierungsverfahren, z.B. durch Triangulation, vom Netz ermittelt werden oder kann durch eine andere Steuerungseinheit mitgeteilt werden, die diese Informationen besitzt.

Damit kann beispielsweise bei der Wahl eines geeigneten Zugangspunkts für einen Handover bzw. eine Übergabe von Diensten neben der minimalen Last auch berücksichtigt werden, wie nah sich ein Endgerät am Rand eines einzelnen Abdeckungsbereichs befindet, d.h. wie groß seine derzeitige Entfernung von jedem Zugangspunkt ist. Damit kann verhindert werden, dass ein Dienst innerhalb des Überlappungsbereichs an einen Zugangspunkt übergeben wird, dessen relative Lage dazu führt, dass bereits bei einer kleinen Veränderung des Standorts des jeweiligen Endgeräts ein erneuter Handover an einen anderen Zugangspunkt erforderlich wird.

Gemäß weiteren Ausführungsformen können insbesondere Positionsinformationen berücksichtigt werden, die sich zu einem zukünftigen Zeitpunkt bzw. in einem zukünftigen Zeitraum voraussichtlich ändern, also Mobilitätsdaten von Endgeräten. Dabei können beispielsweise statistische Daten genutzt werden, die im Netz vorliegen und Informationen darüber beinhalten, mit welcher Wahrscheinlichkeit zu bestimmten Zeitpunkten eine große Anzahl von angeforderten Diensten bzw. Endgeräten an einem Zugangspunkt zu erwarten sind. Diese können beispielsweise aus gespeicherten Daten vergangener Zeiträume gewonnen werden.

Alternativ oder zusätzlich können aber auch Mobilitätsinformationen zur Bestimmung des Lastausgleichs verwendet werden, die beispielsweise aufgrund von Steuerungsdaten innerhalb oder außerhalb des Netzes zumindest teilweise bekannt sind.

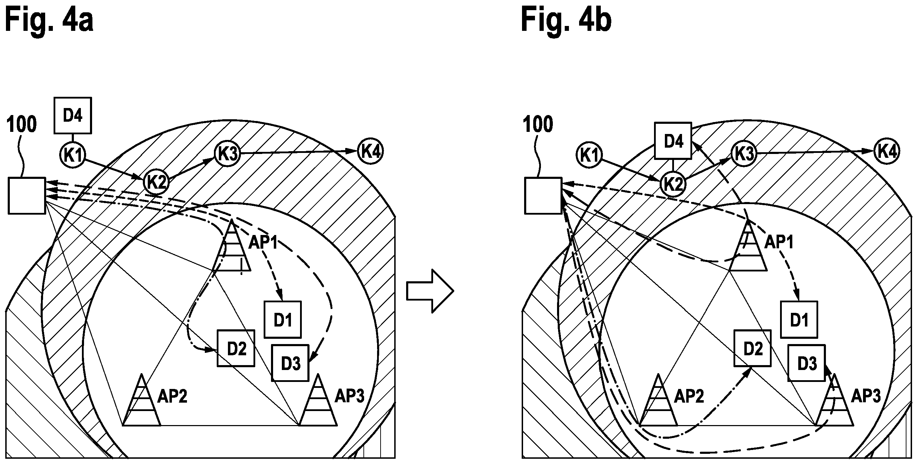

Figuren 4a und 4b zeigen zwei Zeitpunkte in einem derartigen beispielhaften Verfahren. Dabei sind erneut insgesamt vier Endgeräte gezeigt, wobei nun für zumindest eines der Endgeräte Mobilitätsinformationen für einen zukünftigen Zeitraum vorliegen. Die übrigen drei Endgeräte D1 bis D4 können beliebige andere Endgeräte sein, über deren Bewegung keine Informationen vorliegen. Weiter sind wie auch in den Figuren 1 und 2 drei Zugangspunkte dargestellt, die unterschiedliche, aber überlappende Abdeckungsbereiche aufweisen. Die Zugangspunkte sind also so positioniert, dass sich Bereiche bilden, in denen jeweils eine Verbindung zu mindestens zwei Zugangspunkten möglich ist.

Die Mobilitätsinformationen des vierten Endgeräts D4 sind anhand der Knotenpunkte K1 bis K4 dargestellt und beschreiben aktuelle und zukünftige voraussichtliche Positionsinformationen des Endgeräts. Dabei zeigt Figur 4a die aktuelle Position des Endgeräts D4 am ersten Knotenpunkt K1, der außerhalb aller hier berücksichtigten Abdeckungsbereiche der Zugangspunkte liegt. Das Endgerät kann dabei mit einem nicht gezeigten Zugangspunkt verbunden oder an diesem angemeldet sein, oder kann bisher ohne Netzzugang sein. Allerdings liegen nun Informationen über die voraussichtliche Bewegung dieses Endgeräts in einem zukünftigen Zeitraum vor, die darstellen, dass sich das Endgerät auf einer Route entlang der Knotenpunkte K2, K3 und K4 bewegen wird. Im vorliegenden Beispiel sind die Knotenpunkte K2 und K3 innerhalb des Abdeckungsbereichs des ersten Zugangspunkts AP1 gelegen und erreichen keinen der Abdeckungsbereiche der Zugangspunkte AP2 und AP3. Der folgende Knotenpunkt K4 liegt dagegen wieder außerhalb der Abdeckungsbereiche aller betrachteten drei Zugangspunkte. Bevorzugt können für einen oder mehrere Knotenpunkte entlang der Route eines Endgeräts konkrete Zeitpunkte angegeben werden, zu denen das Endgerät D4 den jeweiligen Knotenpunkt erreichen wird. Dabei können die Zeitpunkte auch angegeben werden, indem eine Zeitdauer angegeben wird, die ab der Mitteilung bis zur erwarteten Ankunft des Endgeräts am Knotenpunkt noch verstreichen wird. Alternativ können statt eines Zeitpunkts breitere Zeitintervalle angegeben werden oder Wahrscheinlichkeiten dafür, dass sich das Endgerät zu einem bestimmten Zeitpunkt an diesem bestimmten Knotenpunkt befinden wird. Als weitere Alternative kann eine zeitabhängige Funktion für ein Endgerät an einer bestimmten Position angegeben sein, welche diese Wahrscheinlichkeit beschreibt und damit zu dem wahrscheinlichsten Aufenthaltszeitpunkt (oder für einen längeren Zeitraum) ein Maximum aufweist, während die Wahrscheinlichkeit vor und nach diesem Zeitraum wieder abfällt.

Mittels dieser Informationen kann das Netz eine Voraussage darüber treffen, dass bzw. wann Ressourcen für eine Verbindung des Endgeräts D4 mit dem Zugangspunkt AP1 voraussichtlich erforderlich sein werden, nämlich mindestens zu den Zeitpunkten, zu denen sich das Endgerät an einem Knotenpunkt aufhält, der innerhalb des Abdeckungsbereichs des ersten Zugangspunkts AP1 liegt. Insbesondere kann diese Mobilitätsinformation bereits für einen Lastausgleich berücksichtigt werden, bevor sich das Endgerät in den Abdeckungsbereichen der beteiligten Zugangspunkte befindet. Dabei kann optional auch die Wegstrecke zwischen den Knotenpunkten berücksichtigt werden, indem beispielsweise der Fahrtweg und die sich ergebenden Positionen des Endgeräts zwischen den Knoten interpoliert werden, da der Eintritt in den Abdeckungsbereich schon stattfinden kann, bevor das Endgerät D4 an dem jeweiligen Knotenpunkt ankommt. Alternativ kann ohne spezielle Berechnung jeweils ein Zeitraum vor dem Zeitpunkt des Erreichens des ersten Knotenpunkts im Abdeckungsbereich als Puffer vorgesehen sein, zu dem bevorzugt Netzressourcen für das eintretende Endgerät spätestens frei werden sollen. Die Wahl des Puffer-Zeitraums kann einheitlich für alle Endgeräte stattfinden oder abhängig vom Typ der Endgeräte.

Zusätzlich zu den bereits beschriebenen Bestimmungen der Lastniveaus jedes Zugangspunkts und des kombinierten Lastniveaus für einen Überlappungsbereich kann daher die erwartete zusätzliche Last an einem n-ten Zugangspunkt $AP_n$ zum Zeitpunkt t sowie die Last durch statische Endgeräte (bzw. Endgeräte ohne bekannte Mobilitätsinformationen) zu diesem Zeitpunkt t kombiniert und wieder auf Grundlage der maximalen Last des Zugangspunkts normalisiert werden, so dass sich ein erwartetes zukünftiges Lastniveau $l_n^+(t)$ zum Zeitpunkt t für den n-ten Zugangspunkt ergibt:

$$l_n^+(t) = \frac{L_n(t) + L_n^+(t)}{L_n^{\max}}, \quad 0 \le l_n^+(t) \tag{5}$$

Da in diesem Fall auch potentiell erwartete Verbindungen mit einbezogen werden, kann der Wert für das erwartete zukünftige Lastniveau auch größer als 1 sein; in diesem Fall ist es also erforderlich, Dienste an andere Zugangspunkte zu übergeben, Dienste fallen zu lassen, und/oder angeforderte Dienste abzulehnen, da die maximale Last des Zugangspunkts voraussichtlich überschritten wird.

In Figur 4a ist entsprechend der Situation aus Figur 1 beispielhaft ein momentan hohes Lastniveau des ersten Zugangspunkts AP1 dargestellt, da dieser Dienste für alle Endgeräte D1, D2 und D3 verwaltet. Außerdem stehen dem Zugangspunkt AP1 nun Mobilitätsinformationen zu einem Endgerät D4 zur Verfügung, das bisher nicht mit diesem Zugangspunkt verbunden ist und sich noch nicht in seinem Abdeckungsbereich befindet. Die Durchführung eines Lastausgleichsverfahrens wie vorstehend beschrieben wird also unter Berücksichtigung der erwarteten zukünftigen Last gemäß Gleichung (5) ergeben, dass aufgrund des erwarteten Eintretens des Endgeräts D4 in den Abdeckungsbereich 110 des ersten Zugangspunkts AP1 zunächst zumindest ein Teil der Dienste an einen anderen Zugangspunkt übergeben werden soll. Optional kann dabei auch der optimale Zeitpunkt bestimmt werden, bis zu dem die Übergabe der Dienste abgeschlossen sein soll. Es ist auch möglich, anhand der Mobilitätsdaten für Endgerät D4 entlang der Knotenpunkte K1 bis K4 vorherzusagen, für wie lange die zusätzlichen Ressourcen für dieses Endgerät voraussichtlich bereitgestellt werden müssen. In der beispielhaften Situation aus Figur 4 kann daher als Resultat ein ähnlicher Lastausgleich vorgenommen werden, wie er zuvor für Figur 2 beschrieben wurde.

Figur 4b zeigt einen späteren Zeitpunkt der Situation aus Figur 4a. Das Endgerät D4 hat sich mittlerweile wie anhand der Mobilitätsdaten vorhergesagt an den Knotenpunkt K2 bewegt, und befindet sich damit im Abdeckungsbereich des Zugangspunkts AP1. Durch das beschriebene Lastausgleichsverfahren wurden die Dienste für die Endgeräte D2 und D3 von Zugangspunkt AP1 jeweils an die Zugangspunkte AP2 und AP3 übergeben, so dass der zuvor noch grenzwertig belastete Zugangspunkt AP1 nun ausreichende Ressourcen für die Bereitstellung von Diensten für das Endgerät D4 aufweist.

Ebenso können auch die Zugangspunkte AP2 und AP3 eine Mitteilung über die Mobilitätsdaten des Endgeräts D4 erhalten haben, so dass diese anhand der mitgeteilten Route vorhersagen können, dass das Endgerät D4 voraussichtlich nicht in ihren Abdeckungsbereich eintreten wird und daher bei der Lastbestimmung auch für zukünftige Zeiträume nicht berücksichtigt werden muss.

Zusammen mit den Mobilitätsdaten für ein Endgerät können neben dem Zeitpunkt, zu dem die jeweilige Position eingenommen wird, beispielsweise auch Werte für die voraussichtliche Last angegeben sein, die das Endgerät zu diesen Zeitpunkten nutzen wird, und/oder Informationen über die Relevanz und Wichtigkeit der angeforderten Dienste. Alternativ können durch den Zugangspunkt oder eine Steuereinheit vordefinierte Standardwerte für die angenommene Last eines Endgeräts genutzt werden, wobei die Standardwerte auch abhängig von weiteren Parametern unterschiedlich gesetzt sein können, z.B. auf Basis des Typs eines Endgeräts oder auf Grundlage anderer Parameter, die mit den Positionsinformationen gesendet werden.

In weiteren Ausführungsformen können auch Endgeräte, die an einem Zugangspunkt angemeldet sind, ohne derzeit eine aktive Verbindung über den Zugangspunkt ins Netz zu nutzen, in das Lastausgleichsverfahren mit einbezogen werden. Dabei können beispielsweise Informationen über periodisch angeforderte Dienste eines angemeldeten Endgeräts genutzt werden, um ebenfalls Aussagen über eine zukünftig angeforderte Last an einem bestimmten Zugangspunkt AP1 zu treffen. Falls dabei mit hoher Wahrscheinlichkeit erwartet wird, dass durch neu aufgebaute Dienste angemeldeter Endgeräte die vorgegebenen Schwellwerte für das Lastniveau eines Zugangspunkts überschritten werden, kann eines oder mehrere der inaktiven angemeldeten Endgeräte angewiesen werden, eine andere Zelle zu wählen (cell reselection). Die zukünftige Last durch angemeldete inaktive Endgeräte kann beispielsweise wieder anhand von statistischen bzw. historischen Daten vorhergesagt werden, wenn etwa von bestimmten Endgeräten in periodischen Abständen Dienste angefordert und Verbindungen aufgebaut werden. Diese Ausführungsformen können natürlich auch mit der Verwendung von Mobilitätsdaten kombiniert werden, wobei sowohl Mobilitätsdaten von Endgeräten mit aktiver Verbindung als auch Mobilitätsdaten von inaktiven Endgeräten oder ohne Verbindung berücksichtigt werden können.

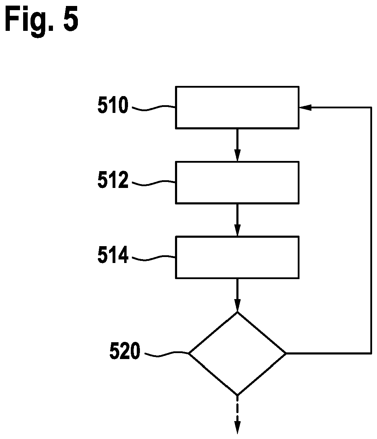

Ein Anwendungsfall für ein beispielhaftes Lastausgleichsverfahren unter der Verwendung von Mobilitätsdaten ist die Kommunikation im Bereich von automatisierten oder autonomen Fahrzeugen, insbesondere fahrerlosen Transportfahrzeugen. Figur 5 zeigt einen Teil eines schematischen Verfahrensablaufs für dieses Beispiel. Die Fahrzeuge können jeweils mindestens eine drahtlose Kommunikationseinheit umfassen, die eine Kommunikation mit den gewünschten Netzwerken ermöglicht und den bisher allgemein beschriebenen Endgeräten entspricht. Die Informationen, die aus der Steuerung der Fahrzeuge bekannt sind, können auf verschiedene Weise an die Zugangspunkte oder an andere Elemente des Netzwerks weitergegeben werden und in die Bestimmung der aktuellen und zukünftigen Lastverteilung und den Lastausgleich einfließen. Dieses erweiterte Verfahren kann insbesondere dann angewendet werden, wenn ein großer Teil der erwarteten Kommunikationsflüsse und Dienste in einem Netzwerk durch mobile Endgeräte mit vorliegenden Mobilitätsinformationen gegeben ist, z.B. in einem lokalen WLAN-Netzwerk oder 5G-Netzwerk mit Steuerung fahrerloser Transportfahrzeuge. Dabei kann ein Steuerzentrum vorhanden sein, welches für die Steuerung der Transportfahrzeuge zuständig ist und damit über Routeninformationen der einzelnen Transportfahrzeuge bzw. ihrer Endgeräte verfügt. Dabei können die Routeninformationen von einer anderen Einheit oder durch Vorgaben festgelegt sein und/oder aktiv durch das Steuerungszentrum bestimmt und berechnet werden. Soweit im folgenden Fahrzeuge genannt sind, sind diese als vernetzte Fahrzeuge mit entsprechenden Endgeräten zu verstehen, die eine Verbindung zu den Zugangspunkten aufbauen können.

Die Route des Fahrzeugs kann auf verschiedene Weise festgelegt sein. Eine mögliche Ausführungsform nutzt wie im Beispiel aus Figur 4 verschiedene Knotenpunkte, entlang derer die Route verläuft. Das Fahrzeug kann sich dabei real in gerader Linie zwischen den Knotenpunkten bewegen; alternativ können die Knotenpunkte eine Annäherung an die tatsächliche Fahrtroute eines Fahrzeugs bilden, wobei die Anzahl der Knotenpunkte entlang einer Route beliebig festgelegt sein kann. Ein derartiges System ist beispielweise in der Veröffentlichung VDA 5050 - "Schnittstelle zur Kommunikation zwischen fahrerlosen Transportfahrzeugen (FTF) und einer Leitsteuerung" ausführlich beschrieben. Dabei kann optional auch zwischen bereits festgelegten Knotenpunkten einer Route, die für das Fahrzeug bereits freigegeben und/oder durch entsprechende Fahrbefehle angewiesen sind (Base Nodes), und voraussichtlichen Knotenpunkten (Horizon Nodes) unterschieden werden. Die voraussichtlichen Knotenpunkte können beispielsweise Knotenpunkte sein, entlang derer sich das Fahrzeug zur Erfüllung eines Auftrags bewegen wird, wenn kein Stau oder andere Situationen auftreten, die eine Umplanung der Route erforderlich machen würden.

Falls zwischen festgelegten und voraussichtlichen Knotenpunkten unterschieden wird, kann dabei beispielsweise die Wahrscheinlichkeit für die festgelegten Knotenpunkte nahe bei 1 liegen, während die maximale Wahrscheinlichkeit für die voraussichtlichen Knotenpunkte darunterliegt und beispielsweise abhängig von der Entfernung oder mit zunehmender Anzahl von möglichen Wegkreuzungen bzw. Routenalternativen abnimmt.

Dabei kann ein Steuerzentrum für die Transportfahrzeuge, z.B. eine Leitsteuerzentrale, über Informationen in Bezug auf alle derzeitigen Positionen aller Fahrzeuge verfügen, sowie über die geplanten Routen aller Fahrzeuge und damit über zukünftige Positionen der Fahrzeuge. Wenn in einer Umgebung ein großer Teil des Datenverkehrs von mobilen Endgeräten mit bekannten Mobilitätsinformationen stammt, können daher zur Entscheidung über den Lastausgleich die Daten des Steuerzentrums mit einbezogen werden.

In einer beispielhaften Situation dieser Art können die Endgeräte in zwei Gruppen betrachtet werden, nämlich fahrerlose Transportfahrzeuge (bzw. allgemein Endgeräte mit bekannten Mobilitätsinformationen), sowie eine Gruppe sonstiger Endgeräte.

Die Last $L_{n,stat}(t)$, die durch die sonstigen Endgeräte D1, D2 und D3 (also "statische" Endgeräte, bzw. Endgeräte, für die keine Mobilitätsdaten vorliegen) verursacht wird, wird in Schritt 510 bevorzugt so behandelt und ausgewertet, wie zuvor in Bezug auf die Figuren 1 bis 3 beschrieben wurde.

Die Last, die von den Transportfahrzeugen verursacht wird, kann dagegen anders behandelt werden. Ein Zugangspunkt sendet in Schritt 512 eine Anforderung an das Fahrzeug-Steuerzentrum, mit der eine Liste aller Fahrzeuge angefordert wird, die sich zu einem vorgegebenen zukünftigen Zeitpunkt (z.B. "in 60 min") innerhalb des Abdeckungsbereichs befinden werden. Dieser zukünftige Zeitpunkt kann als Konfigurationsparameter des Lastausgleichsverfahrens festgelegt sein, und kann auch für alle Zugangspunkte gleich vorgegeben sein oder allen Zugangspunkten mitgeteilt werden. Außerdem kann für jedes in der Liste aufgeführte Transportfahrzeug AGV $i$ ein Wahrscheinlichkeitswert $p(i)$ angegeben sein, der die Wahrscheinlichkeit angibt, mit der sich das i-te Transportfahrzeug $AGV_i$ zum vorgegebenen Zeitpunkt im Abdeckungsbereich des anfragenden Zugangspunkts befinden wird.

Um nun in Schritt 514 die Gesamtlast $L_{n,AGVs}(t)$ aller Transportfahrzeuge (AGVs) für einen Zugangspunkt n zum Zeitpunkt t zu bestimmen, kann diese erhaltene Wahrscheinlichkeit p(n,i) in Bezug auf den Zugangspunkt n als Gewichtungsfaktor für die Last eines einzelnen Transportfahrzeugs $i$ eingesetzt werden. Die Last $L_{n,AG}(t,i)$ eines einzelnen Transportfahrzeugs i zum Zeitpunkt t kann durch eine Abschätzung oder einen aus früheren Daten gewonnenen Wert für die durchschnittliche Last eines einzelnen Fahrzeugs vorgegeben sein.

$$L_{n,AGVs}(t) = \sum_{i=1}^{I} p(n,i) \cdot L_{n,AGV}(t,i) \qquad (6)$$

Damit kann dann eine zukünftige Last am Zugangspunkt n zum Zeitpunkt T bestimmt werden, wobei die Last, die durch die *I* Transportfahrzeuge (Endgeräte mit Mobilitätsdaten) verursacht wird, und die Last gemäß Gleichung (6), die durch N Endgeräte ohne Mobilitätsdaten verursacht wird, summiert wird:

$$L_n^{+,AGVs}(t) = L_{n,stat}(t) + L_{n,AGVs}(t) \qquad (7)$$

Die so bestimmte zukünftige Gesamtlast aus Gleichung (7) auf Grundlage von Mobilitätsdaten kann entsprechend wie in Gleichung (5) verwendet werden, um das zu erwartende zukünftige normalisierte Lastniveau eines Zugangspunkts zu bestimmen und in Schritt 520 hinsichtlich der vorgegebenen maximalen Lastgrenzen auszuwerten, und um dann auf dieser Basis wie bereits zuvor beschrieben einen Lastausgleich zwischen den N Zugangspunkten vorzunehmen. Die weiteren Schritte zur Prüfung der Gesamtlast im Überlappungsbereich und zum Finden eines geeigneten Zugangspunkts entsprechen den Schritten 330 bis 360 in Figur 3, wobei bevorzugt für alle Zugangspunkte die summierte Last gemäß Gleichung (7) verwendet wird, und sind hier nicht näher ausgeführt.

Ein Zugangspunkt kann auch mehrere Dienste übergeben, um den Lastausgleich zu bewerkstelligen, und kann dabei entweder alle Dienste an einen Zugangspunkt übergeben oder die Dienste variabel an unterschiedliche Zugangspunkte abgeben. Dabei kann beispielsweise ein voraussichtliches Lastniveau nach Abgeben einer Last berechnet werden und abhängig davon, ob das voraussichtliche Lastniveau dann unter dem gewünschten Schwellwert für das Lastniveau des Zugangspunkts liegt, die Übergabe eingeleitet werden oder weitere Dienste für die Übergabe an einen anderen Zugangspunkt ausgewählt werden.

Die tatsächlichen Schritte und Protokolle, die einen Handover zu einem anderen Zugangspunkt, einem anderen Netz oder einer anderen Zelle veranlassen und durchführen, sind systemabhängig und an sich im Fach bekannt. Falls in den zuvor beschriebenen Schritten bestimmt wurde, dass eine Übergabe von Diensten an einen anderen Zugangspunkt erwünscht ist, können daher zu diesem Zweck beispielsweise entsprechende Protokollnachrichten von einem Zugangspunkt an ein Endgerät gesendet werden, in denen eine Aufforderung zum Handover an den gemäß dem vorstehenden Verfahren ausgewählten Zugangspunkt mitgeteilt wird. Ebenso kann als Zwischenschritt jedem Zugangspunkt beispielsweise eine Liste möglicher Zugangspunkte (entsprechend einer Nachbarliste, neighbor list) für einen Handover mitgeteilt werden, deren aktuelle Lastniveaus dann separat oder in Form dieser Liste ebenfalls bekannt gegeben werden können.

In den vorstehenden Beispielen wurden die Auswertung der Lastniveaus und die Entscheidung über einen Lastausgleich jeweils maßgeblich durch die Zugangspunkte durchgeführt. Ebenso sind aber andere Varianten möglich, beispielsweise die Nutzung einer zentralen Steuereinheit im Netz (wie etwa die AMF, Access and Mobility Management Function, in Bezug auf ein 5G-Netz), die dann dienstbezogene Informationen der Verbindungen sammelt und daraus die derzeitigen Lastniveaus ableitet und den Lastausgleich verwaltet. Ebenso sind Kombinationen mehrerer Einheiten im Netz denkbar.

Auf ähnliche Weise können die Mobilitätsdaten von mobilen Endgeräten von unterschiedlichen geeigneten Einheiten bereitgestellt werden, oder können beispielsweise von einer Steuereinheit im Netz aus unterschiedlichen Quellen gesammelt werden und dann bei Bedarf an die betreffenden Zugangspunkte weitergegeben werden.

Es versteht sich, dass die vorstehenden Schritte für Endgeräte, für die das Netz oder eine andere Steuereinheit über Mobilitätsdaten verfügt, auf die verschiedensten Ausführungsformen übertragen werden können und nicht auf das Beispiel der fahrerlosen Transportfahrzeuge eingeschränkt ist. Ähnliche Situationen ergeben sich beispielsweise bei autonomen oder teilautonomen vernetzten Schienenfahrzeugen, bei denen aus Sicherheitsgründen z.B. für Routensignale eine zuverlässige und verzögerungsfreie Verbindung jederzeit erforderlich ist.

Ebenso kann für ein Navigationssystem in einem vernetzten Fahrzeug, bei dem ein Nutzer eine bestimmte Fahrtroute ausgewählt hat, diese Route zur Auswertung von Mobilitätsdaten genutzt werden. Die Tatsache, dass das Fahrzeug dabei je nach Ausführungsform individuell steuerbar bleibt und sich der Nutzer auch gegen die gewählte Route entscheiden kann, kann wieder durch Einbezug von Wahrscheinlichkeitswerten in den Mobilitätsdaten berücksichtigt werden.

Auch für einzelne Nutzer eines mobilen Endgeräts können Mobilitätsdaten mit einer gewissen reduzierten Eintrittswahrscheinlichkeit beispielsweise auf Basis ihres bisherigen Verhaltens gewonnen werden, z.B. durch Erkennen regelmäßiger Aufenthaltsorte zu einer bestimmten Tageszeit.

## Patentansprüche

1. Verfahren zum Lastausgleich in einem Kommunikationsnetz, welches in einer Recheneinheit ausgeführt wird, umfassend:

   Erfassen von Mobilitätsdaten (512) mindestens eines Endgeräts (D4), wobei die Mobilitätsdaten eine oder mehrere zukünftige Positionen (K1, K2, K3, K4) des Endgeräts (D4) in einem oder mehreren vorbestimmten Zeitabschnitten angeben, wobei die Mobilitätsdaten weiter mindestens einen Wahrscheinlichkeitswert umfassen, welcher angibt, mit welcher Wahrscheinlichkeit sich das Endgerät (D4) in dem vorbestimmten Zeitpunkt an einer der ein oder mehreren Positionen (K1, K2, K3, K4) befindet, und

   Bestimmen (310) eines Lastniveaus eines ersten Zugangspunkts (AP1) des Kommunikationsnetzes mindestens auf Grundlage von Parametern der Dienste, die von dem Zugangspunkt an Endgeräte (D1, D2, D3) bereitgestellt werden, und
   Bestimmen (514) eines Lastniveaus des ersten Zugangspunkts (AP1) zu einem zukünftigen Zeitpunkt zusätzlich auf Grundlage der erfassten Mobilitätsdaten für mindestens ein Endgerät und auf Grundlage von Parametern der Dienste, die von dem Zugangspunkt voraussichtlich für das mindestens eine Endgerät (D4) zu dem zukünftigen Zeitpunkt bereit gestellt werden sollen, wobei eine zukünftige Last, die durch das Endgerät (D4) verursacht wird, mit dem Wahrscheinlichkeitswert der Mobilitätsdaten gewichtet wird;
   und, falls (320) das Lastniveau des ersten Zugangspunkts (AP1) aktuell oder zu einem zukünftigen Zeitpunkt über einem vorgegebenen ersten Schwellwert liegt,

   Vorbereiten (350, 360) einer Übergabe mindestens eines Dienstes für das erste Endgerät an einen zweiten Zugangspunkt aus einem oder mehreren benachbarten Zugangspunkten (AP2, AP3), wobei die Abdeckungsbereiche (120, 130) der benachbarten Zugangspunkte (AP2, AP3) zumindest teilweise mit dem Abdeckungsbereich (110) des ersten Zugangspunkts (AP1) überlappen und damit einen Überlappungsbereich (140) bilden.

**2.** Verfahren nach Anspruch 1, wobei das Lastniveau als normalisiertes Lastniveau als Quotient aus einer absoluten Last des ersten Zugangspunkt und einer maximalen Last des ersten Zugangspunkts bestimmt wird.

**3.** Verfahren nach einem der vorhergehenden Ansprüche, weiter umfassend:
Empfangen mindestens einer Nachricht, welche Informationen über das Lastniveau von einem oder mehreren benachbarten Zugangspunkten umfasst.

**4.** Verfahren nach Anspruch 3, wobei das Vorbereiten einer Übergabe weiter umfasst:

Auswählen (350), aus den benachbarten Zugangspunkten (AP2, AP3), des Zugangspunkts mit dem geringsten derzeitigen Lastniveau als den zweiten Zugangspunkt; und
Einleiten einer Übergabe mindestens eines Dienstes für das erste Endgerät an den zweiten Zugangspunkt.

**5.** Verfahren nach einem der Ansprüche 3 oder 4, wobei das Vorbereiten einer Übergabe mindestens eines Dienstes weiter umfasst:

Bilden (330) eines kombinierten Lastniveaus in dem Überlappungsbereich (140) aus der Summe der Lastniveaus aller Zugangspunkte (AP1, AP2, AP3), deren Abdeckungsbereiche (110, 120, 130) sich zumindest teilweise überlappen; und
Prüfen (340), ob das kombinierte Lastniveau in dem Überlappungsbereich (140) einen vorgegebenen zweiten Schwellwert überschreitet,
wobei keine Übergabe durchgeführt wird, wenn das kombinierte Lastniveau den zweiten Schwellwert überschreitet.

**6.** Verfahren nach einem der vorhergehenden Ansprüche, wobei die Recheneinheit eine Steuereinheit des ersten Zugangspunkts (AP1) umfasst.

**7.** Verfahren nach einem der Ansprüche 1 bis 5, wobei die Recheneinheit eine zentrale Steuereinheit des Kommunikationsnetzes umfasst.

**8.** Recheneinheit, die dazu eingerichtet ist, ein Verfahren nach einem der vorstehenden Ansprüche 1 bis 7 durchzuführen.

**9.** Computerprogramm, das eine Recheneinheit veranlasst, ein Verfahren nach einem der Ansprüche 1 bis 7 durchzuführen, wenn es auf der Recheneinheit ausgeführt wird.

**10.** Maschinenlesbares Speichermedium mit einem darauf gespeicherten Computerprogramm nach Anspruch 9.


**Claims**

**1.** Method for balancing the load in a communication network, which method is carried out in a computing unit and comprises:
capturing mobility data (512) relating to at least one terminal (D4), wherein the mobility data indicate one or more future positions (K1, K2, K3, K4) of the terminal (D4) in one or more predetermined periods of time, wherein the mobility data also comprise at least one probability value which indicates the probability with which the terminal (D4) will be at one of the one or more positions (K1, K2, K3, K4) at the predetermined time, and

determining (310) a load level of a first access point (AP1) of the communication network at least on the basis of parameters of the services which are made available to terminals (D1, D2, D3) by the access point, and additionally determining (514) a load level of the first access point (AP1) at a future time on the basis of the captured mobility data for at least one terminal and on the basis of parameters of the services which are presumably intended to be provided for the at least one terminal (D4) by the access point at the future time, wherein a future load caused by the terminal (D4) is weighted with the probability value of the mobility data; and, if (320) the load level of the first access point (AP1) is above a predefined first threshold value at the present time or at a future time,
preparing (350, 360) for a transfer of at least one service for the first terminal to a second access point from one or more adjacent access points (AP2, AP3), wherein the coverage areas (120, 130) of the adjacent access points (AP2, AP3) at least partially overlap the coverage area (110) of the first access point (AP1) and therefore form an overlapping area (140).

2. Method according to Claim 1, wherein the load level is determined, as a normalized load level, as the quotient of an absolute load of the first access point and a maximum load of the first access point.

3. Method according to one of the preceding claims, also comprising:
receiving at least one message comprising information relating to the load level from one or more adjacent access points.

4. Method according to Claim 3, wherein preparing for a transfer also comprises:

selecting (350), from the adjacent access points (AP2, AP3), the access point with the lowest current load level as the second access point; and
initiating a transfer of at least one service for the terminal to the second access point.

5. Method according to either of Claims 3 and 4, wherein preparing for a transfer of at least one service also comprises:

forming (330) a combined load level in the overlapping area (140) from the sum of the load levels of all access points (AP1, AP2, AP3) whose coverage areas (110, 120, 130) at least partially overlap; and
checking (340) whether the combined load level in the overlapping area (140) exceeds a predefined second threshold value,
wherein no transfer is carried out if the combined load level exceeds the second threshold value.

6. Method according to one of the preceding claims, wherein the computing unit comprises a control unit of the first access point (AP1).

7. Method according to one of Claims 1 to 5, wherein the computing unit comprises a central control unit of the communication network.

8. Computing unit which is configured to carry out a method according to one of the preceding Claims 1 to 7.

9. Computer program which causes a computing unit to carry out a method according to one of Claims 1 to 7 when it is executed on the computing unit.

10. Machine-readable storage medium having a computer program according to Claim 9 stored thereon.

**Revendications**

1. Procédé d'équilibrage de charge dans un réseau de communication, lequel procédé est mis en œuvre dans une unité informatique et comprend les étapes suivantes :

acquérir des données de mobilité (512) d'au moins un terminal (D4), les données de mobilité indiquant une ou plusieurs positions futures (K1, K2, K3, K4) du terminal (D4) dans un ou plusieurs intervalles de temps prédéterminés, les données de mobilité comprenant en outre au moins une valeur de probabilité qui indique la probabilité avec laquelle le terminal (D4) se trouve à l'une des une ou plusieurs positions (K1, K2, K3, K4) à l'instant prédéterminé, et
déterminer (310) un niveau de charge d'un premier point d'accès (AP1) du réseau de communication au moins sur la base de paramètres des services qui sont fournis aux terminaux (D1, D2, D3) par le point d'accès, et
déterminer (514) un niveau de charge du premier point d'accès (AP1) à un instant futur en plus sur la base des données de mobilité acquises pour au moins un terminal et sur la base de paramètres des services qui doivent probablement être fournis à l'au moins un terminal (D4) à l'instant futur à partir du point d'accès, une charge future générée par le terminal (D4) étant pondérée avec la valeur de probabilité des données de mobilité ;
et si (320) le niveau de charge du premier point d'accès (AP1) est actuellement ou à un instant futur supérieur à une première valeur seuil spécifiée,
préparer (350, 360) un transfert d'au moins un service destiné au premier terminal vers un deuxième point d'accès à partir des un ou plusieurs points d'accès adjacents (AP2, AP3), les zones de couverture (120, 130) des points d'accès adjacents (AP2, AP3) chevauchant au moins partiellement la zone de couverture (110) du premier point d'accès (AP1) et formant ainsi une zone de chevauchement (140).

2. Procédé selon la revendication 1, le niveau de charge étant déterminé comme un niveau de charge normalisé sous la forme d'un quotient d'une charge absolue du premier point d'accès et d'une charge maximale du premier point d'accès.

3. Procédé selon l'une des revendications précédentes, comprenant en outre :
recevoir au moins un message qui comprend des informations sur le niveau de charge d'un ou plusieurs points d'accès adjacents.

4. Procédé selon la revendication 3, la préparation d'un transfert comprend en outre les étapes suivantes :

sélectionner (350), parmi les points d'accès adjacents (AP2, AP3), le point d'accès ayant le niveau de charge actuel le plus faible comme deuxième point d'accès ; et
amorcer un transfert d'au moins un service destiné au premier terminal vers le deuxième point d'accès.

5. Procédé selon la revendication 3 ou 4, la préparation d'un transfert d'au moins un service comprenant en outre les étapes suivantes :

former (330) un niveau de charge combiné dans la zone de chevauchement (140) à partir de la somme des niveaux de charge de tous les points d'accès (AP1, AP2, AP3) dont les zones de couverture (110, 120, 130) se chevauchent au moins partiellement ; et
vérifier (340) si le niveau de charge combiné dans la zone de chevauchement (140) dépasse une deuxième valeur seuil spécifiée,
aucun transfert n'étant effectué si le niveau de charge combiné dépasse la deuxième valeur seuil.

6. Procédé selon l'une des revendications précédentes, l'unité informatique comprenant une unité de commande du premier point d'accès (AP1).

7. Procédé selon l'une des revendications 1 à 5, l'unité informatique comprenant une unité de commande centrale du réseau de communication.

8. Unité informatique qui est conçue pour mettre en œuvre un procédé selon l'une des revendications 1 à 7 précédentes.

9. Logiciel qui amène une unité informatique de mettre en œuvre un procédé selon l'une des revendications 1 à 7 lorsqu'il est exécuté sur l'unité informatique.

10. Support de stockage lisible par machine sur lequel est mémorisé un logiciel selon la revendication 9.

**Fig. 1**

D4

110

100

151

AP1

140

D1

D2

D3

130

AP2

153

AP3

152

120

EP 3 860 221 B1

Fig. 2

Fig. 3

EP 3 860 221 B1

# Fig. 4a

# Fig. 4b

EP 3 860 221 B1

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20180242160 A1
- DE 102017108428 A1
- US 20170208502 A1